# EUROPEAN PATENT APPLICATION

(11) **EP 2 854 461 A1**
(43) Date of publication of application: **01.04.2015**
(21) Application number: 13306306.5
(22) Date of filing: 25.09.2013
(51) Int. Cl.: H04W 56/00, H04J 3/06

(54) **Method for transmitting a service clock through a synchronous packet-switched backhauling network of a mobile communication system**

(71) Applicant: ALCATEL LUCENT, 92100 Boulogne-Billancourt (FR)
(72) Inventor: Gerosa, Marzio, 20871 Vimercate (MB) (IT); Valtolina, Roberto, 20871 Vimercate (MB) (IT)
(74) Representative: Pietra, Giulia

(57) **Abstract**

It is disclosed a method for transmitting a service clock from a base station controller to a base station of a mobile communication system through a synchronous, packet-switched backhauling network synchronized to a network clock. A master synchronization interworking device interfacing base station controller and backhauling network receives the service clock from the base station controller, generates a timestamp indicative of a difference between network clock and service clock, and transmits the timestamp through the backhauling network. A slave synchronization interworking device interfacing backhauling network and base station receives the timestamp, recovers the service clock based on received timestamp and network clock, and forwards the recovered service clock to the base station. This allows synchronizing the base station to a service clock which is in principle independent of the network clock. Several operators may accordingly share the backhauling network, each one preserving the ability to use an independent service clock.

## Description

### Technical field

The present invention generally relates to the field of mobile communication systems. In particular, the present invention relates to a method for transmitting a service clock through a backhauling network of a mobile communication system, more particularly a synchronous packet-switched backhauling network of a mobile communication system. The present invention further relates to devices suitable to implement such method and to a mobile communication system comprising the devices.

### Background art

As it is known, a mobile communication system allows a plurality of users provided with respective user terminals (e.g. mobile phones, smart phones, tablets, laptop PCs, etc.) spread over a wide geographical area to access telephone services and data services via wireless connection. Exemplary mobile communication systems are GSM (Global System for Mobile communications), UMTS (Universal Mobile Telecommunications System), LTE (Long Term Evolution), HSDPA (High-Speed Downlink Packet Access), etc.

### Summary

By referring by way of example to GSM, such mobile communication system comprises a number of base transceiver stations (briefly, BTS) spread over a certain geographical area, each BTS being configured to exchange traffic with user terminals located within its own coverage area or cell. Several BTSs are typically connected to a base station controller (briefly, BSC) by means of a so-called backhauling network, which is responsible for gathering upstream traffic (namely, traffic generated by the user terminals) from the BTSs and distribute downstream traffic (namely, traffic addressed to the user terminals) to the BTSs.

The backhauling network typically comprises a number of nodes, which are reciprocally interconnected according to a tree topology having its root connected to the BSC. Each node may also be connected to one or more BTSs located at the same site as the node. The BTSs are accordingly spread over the various levels of the tree topology.

In GSM systems, the backhauling network is a time-division multiplexing network, wherein traffic is transmitted in the form of E1 frames. The E1 frames, besides carrying user traffic, are also inherently capable of transmitting synchronism from the BSC to the BTSs. This allows all BTSs to be synchronized to a same clock provided by the BSC. Synchronization of the BTSs to a same clock is needed for enabling proper operation of the known handover procedure, which allows user terminals passing from a cell to a neighboring cell in a hitless way (namely, without any service interruption).

In UMTS and subsequent mobile communication systems (e.g. HSDPA and LTE), the backhauling network that connects node-Bs (corresponding to the BTSs of GSM) and RNC (Radio Network Controller, corresponding to the BSC of GSM) is instead a synchronous packet-switched network, which is typically based on Synchronous Ethernet (or, briefly, SyncE). As known, in a SyncE network all the nodes receive a synchronization signal from a unique clock source, which allows synchronizing all of them to a same clock (also called Ethernet Equipment Clock or, briefly, EEC). The accuracy of the EEC is defined by the Recommendation ITU-T G.8262. Hence, use of a SyncE network as backhauling network allows synchronizing all the node-Bs to the same EEC, thereby allowing proper operation of the handover procedure.

Typically, when two or more mobile communication operators provide their services in a same geographical area, each operator has its own mobile communication system, which comprises its own BSC or RNC, its own BTSs or node-Bs, and its own backhauling network. Mobile communication systems of different operators are typically physically separated from each others.

However, in some cases it may be advantageous for mobile communication operators to share part of their mobile communication systems, in particular the backhauling network. In such cases, the root node of the backhauling network is connected to multiple BSCs or RNCs (one for each operator), whereas each node of the backhauling network may be locally connected to BTSs or node-Bs of different operators. The packet-switching mechanism implemented by the backhauling network guarantees proper routing of the user traffic between BSC/RNC and BTSs/node-Bs of the same operator.

In such scenario, when the backhauling network is a SyncE network (which is the case in UMTS, LTE, HSDPA systems), all the node-Bs are synchronized to the same EEC, even if they pertain to different mobile communication operators.

Synchronizing node-Bs of different operators to a same clock may however be useless, since the handover procedure inherently involves only node-Bs of a same operator.

Moreover, for a mobile communication operator that shares a same backhauling network with another operator, it may be desirable to have its node-Bs synchronized to a clock which is independent of the EEC of the backhauling network and independent of the clock to which node-Bs of the other operator(s) are synchronized.

In view of the above, the inventors have addressed the problem of providing a method for transmitting synchronism through a synchronous packet-switched backhauling network of a mobile communication system, which allows synchronizing the base stations of a mobile communication operator to a clock independent of the network clock of the backhauling network (namely, the EEC in case of SyncE) and independent of the clock to which base stations of possible other operators that use the same backhauling network are synchronized.

In the present description and in the claims, the expression "base station" will designate a piece of equipment of a mobile communication system, which allows wireless communication between user equipment (UE) and network. UEs are devices like mobile phones, smartphone, computers with wireless Internet connectivity and so on. A base station may be e.g. a BTS of a GSM system, a node-B of a UMTS system, an enode-B of a LTE system, and so on.

Further, in the present description and in the claims, the expression "base station controller" will designate a piece of equipment of a mobile communication system, which is responsible for controlling the base stations that are connected to it. A base station controller may be e.g. a BSC of a GSM system, an RNC of a UMTS or LTE system, and so on.

According to a first aspect, there is provided a method for transmitting a service clock from a base station controller to at least one base station of a mobile communication system through a synchronous, packet-switched backhauling network synchronized to a network clock, the method comprising:
a) at a master synchronization interworking device interfacing the base station controller and the backhauling network, receiving the service clock from the base station controller, generating a timestamp indicative of a difference between the network clock and the service clock, and transmitting the timestamp through the backhauling network.

Preferably, the method also comprises:
b) at a slave synchronization interworking device interfacing the backhauling network and the at least one base station, receiving the timestamp from the backhauling network, recovering the service clock based on the received timestamp and the network clock, and forwarding the recovered service clock to the at least one base station.

Preferably, step a) comprises receiving the service clock through a bidirectional physical link connecting the master synchronization interworking device to a synchronous physical interface of the base station controller.

Preferably, step b) comprises forwarding the recovered service clock through a further bidirectional physical link connecting the slave synchronization interworking device to a further synchronous physical interface of the at least one base station.

Preferably, step a) comprises recovering the network clock from the backhauling network and using the recovered network clock and the service clock for generating the timestamp.

Preferably, step b) comprises recovering the network clock from the backhauling network and using the recovered network clock and the received timestamp for recovering the service clock.

Preferably, step a) comprises generating a sequence of timestamps.

Preferably, step a) comprises generating a service synchronization packet comprising the timestamp and transmitting the service synchronization packet through the backhauling network.

According to some embodiments, while the service clock is transmitted through the backhauling network, a further service clock is transmitted from a further base station controller to at least one further base station of the mobile communication system through the backhauling network, the method comprising:
a') at a further master synchronization interworking device interfacing the further base station controller and the backhauling network, receiving the further service clock from the further base station controller, generating a further timestamp indicative of a difference between the network clock and the further service clock, and transmitting the further timestamp through the backhauling network; and
b') at a further slave synchronization interworking device interfacing the backhauling network and the at least one further base station, receiving the further timestamp from the backhauling network, recovering the further service clock based on the further received timestamp and the network clock, and forwarding the further recovered service clock to the at least one further base station.

According to a variant, the network clock is derived from one of the service clock and the further service clock.

According to a second aspect, there is provided a device suitable for interfacing a base station controller and a backhauling network of a mobile communication system, the backhauling network being a synchronous, packet-switched network synchronized to a network clock, the device being configured to:
- receive a service clock from the base station controller;
- generate a timestamp indicative of a difference between the network clock and the service clock; and
- transmit the timestamp through the backhauling network.

According to a third aspect, there is provided a device suitable for interfacing a backhauling network and at least one base station of a mobile communication system, the backhauling network being a synchronous, packet-switched network synchronized to a network clock, the device being configured to:
- receive a timestamp from the backhauling network;
- recover a service clock based on the received timestamp and the network clock; and
- forward the recovered service clock to the at least one base station.

According to a fourth aspect, there is provided a device suitable for interfacing a backhauling network of a mobile communication system with a base station controller or at least one base station of the mobile communication system, the device being configured to:
- receive the service clock from the base station controller, generate a timestamp indicative of a difference between the network clock and the service clock, and transmit the timestamp through the backhauling network; or
- receive a timestamp from the backhauling network, recover the service clock based on the received timestamp and the network clock, and forward the recovered service clock to the at least one base station.

The device according to the second, third or fourth aspect is preferably implemented as a unit pluggable in an apparatus of a node of the backhauling network.

Preferably, the device is implemented as a small form-factor pluggable device.

According to a fifth aspect, there is provided a mobile communication system comprising a base station controller, at least one base station and a synchronous, packet-switched backhauling network synchronized to a network clock, the mobile communication system also comprising a first device according to either the second or fourth aspect and arranged so as to interface the base station controller and the backhauling network, and a second device according to either the third or fourth aspect and arranged so as to interface the backhauling network and the at least one base station.

### Brief description of the drawings

The present invention will become clearer by reading the following detailed description, given by way of example and not of limitation, to be read by referring to the accompanying drawings, wherein:
- Figure 1 shows a mobile communication system according to an embodiment of the present invention;
- Figures 2 and 2b are block diagrams of the master synchronization interworking device and the slave synchronization interworking device shown in Figure 1; and
- Figure 3 shows a synchronization interworking device according to a particularly advantageous variant.

### Detailed description of preferred embodiments of the invention

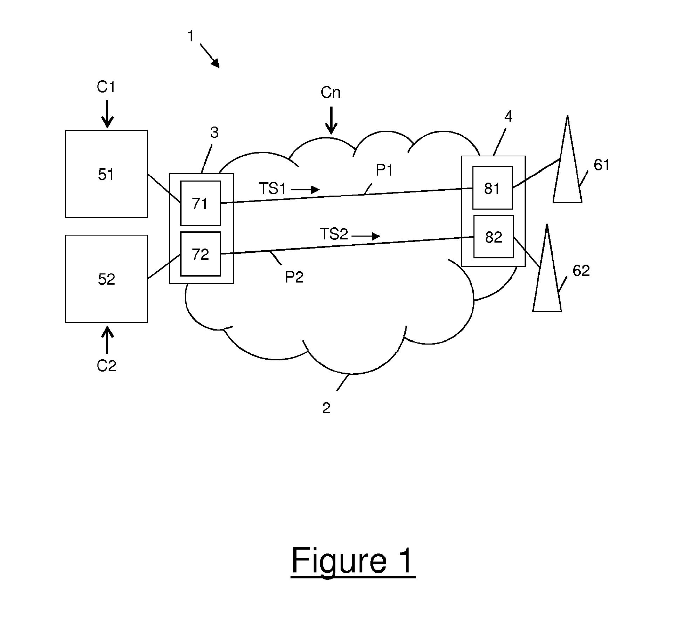

Figure 1 schematically shows a mobile communication system 1 according to an embodiment of the present invention. The mobile communication system 1 preferably is a 3G system such as UMTS or a system of a generation successive to 3G, such as LTE or HSDPA system.

The mobile communication system 1 comprises a backhauling network 2. The backhauling network 2 preferably is a packet-switched network of the synchronous type, namely all the nodes of the backhauling network 2 are synchronized to a same network clock Cn. In particular, the nodes of the backhauling network 2 exchange the network clock Cn by means of a known Physical Layer based technique (e.g. the background or heart-beat messages defined by the ITU-T Recommendation G.8264). The network clock Cn may be provided by one of the network nodes acting as a clock source and distributed to the other nodes. The backhauling network 2 is preferably a SyncE network, its network clock Cn being the Ethernet Equipment Clock (or EEC) of each network node.

The backhauling network 2 comprises a number of nodes reciprocally interconnected according to any known topology, preferably a tree topology. In Figure 1, for simplicity, only the root node 3 and a further node 4 are shown, while the rest of the backhauling network 2 is schematically depicted as a cloud. The node 4 may be either a leaf or an intermediate node of the tree topology, and may be connected to the root node 3 either directly or through other intermediate nodes (not shown in Figure 1).

Each node of the backhauling network comprises a fabric (namely, a switch or router, e.g. an Ethernet switch). For not overloading the drawing, the fabrics of the root node 3 and node 4 are not depicted in Figure 1.

Each node is connected to other nodes of the backhauling network by means of wireless connections or wired connections (e.g. fiber optic connections or copper connections).

Each node is also locally connected, by means of physical links, to one or more base stations (e.g. BTS and or node-Bs or enode--Bs) located at the same site. In particular, within each node the fabric of the node has ports connected to the base station(s) of the site and ports connected to the interface apparatus(es) connecting the node to other nodes of the network, and is configured to properly route traffic received at the node either from another node of the backhauling network 2 or from the base station(s) of the site.

The backhauling network 2 of the mobile communication system 1 is preferably shared amongst multiple mobile communication operators. By way of non limiting example, in the following description it is assumed that two mobile communication operators O1, O2 share the backhauling network 2.

Hence, the mobile communication system 1 comprises two different base station controllers (or RNC, using the terminology of UMTS and LTE) 51, 52, one for each mobile communication operator O1, O2. Both the base station controllers 51, 52 are connected to the backhauling network 2. In particular, the base station controllers 51, 52 are connected by means of respective physical links to the root node 3 of the backhauling network 2. The root node 3 comprises a fabric capable of properly routing traffic received from and addressed to the base station controllers 51, 52.

Besides, each node of the backhauling network 2 may be locally connected to base stations of both the communication network operators O1, O2. Base stations of different operators may be connected to a same node, namely they may coexist at the same site. By way of non limiting example, in the following description it is assumed that the node 4 is locally connected to two base stations 61, 62, one for each mobile communication operator O1, O2, by means of respective physical links.

Hence, the base station 61 receives traffic from mobile terminals of customers of the operator O1 located in its cell and forwards it to the base station controller 51 in the form of Ethernet packets by means of the backhauling network 2 while, specularly, the base station controller 51 transmits to the base station 61 traffic addressed to mobile terminals of customers of the operator O1 located in its cell in the form of Ethernet packets by means of the backhauling network 2. Similarly, the base station 62 receives traffic from mobile terminals of customers of the operator O2 located in its cell and forwards it to the base station controller 52 in the form of Ethernet packets by means of the backhauling network 2 while, specularly, the base station controller 52 transmits to the base station 62 traffic addressed to mobile terminals of customers of the operator O2 located in its cell in the form of Ethernet packets by means of the backhauling network 2.

The virtual paths P1, P2 joining the base station controllers 51, 52 and the base stations 61, 62 through the backhauling network 2, respectively, are depicted in Figure 1. The Ethernet packets carrying traffic pertaining to the operators O1, O2 are properly routed along the virtual paths P1, P2 by means of the packet-switching mechanism implemented by the fabrics included in each node of the backhauling network 2.

Preferably, the base station controller 51 of the first operator O1 is synchronized to a first clock C1, while the base station controller 52 of the second operator O2 is synchronized to a second clock C2. The clocks C1 and C2 will be termed herein after "first/second service clocks". Herein after, it is assumed that both the first service clock C1 and the second service clock C2 are independent of the network clock Cn to which the nodes of the backhauling network 2 are synchronized. This is non limiting, since the network clock Cn of the synchronous backhauling network 2 may be derived from one of the two service clocks C1, C2, as it will be further discussed herein after.

Preferably, the root node 3 of the backhauling network 2 comprises a first master synchronization interworking device 71 cooperating with the base station controller 51 and configured to generate a first timestamp TS1 (preferably, a sequence of periodically generated first timestamps) indicative of a difference between the first service clock C1 and the network clock Cn of the backhauling network 2 and to transmit such generated first timestamp(s) TS1 to all the nodes locally connected to one or more base stations of the first operator O1.

Besides, each node locally connected to one or more base stations of the first operator O1 (including the node 4) preferably comprises a first slave synchronization interworking device 81 cooperating with the base stations of the first operator O1 (e.g. the base station 61) and configured to, upon reception of the first timestamp(s) TS1 from the first master synchronization interworking device 71, recover the first service clock C1 based on the first timestamp(s) TS1 and the network clock Cn, and transmit the recovered first service clock C1 to the base station(s) of the first operator O1.

Similarly, the root node 3 of the backhauling network 2 comprises a second master synchronization interworking device 72 cooperating with the base station controller 52 and configured to generate a second timestamp (preferably, a sequence of periodically generated first timestamps) TS2 indicative of a difference between the second service clock C2 and the network clock Cn of the backhauling network 2 and to transmit such generated second timestamp(s) TS2 to all the nodes locally connected to one or more base stations of the second operator O2.

Besides, each node locally connected to one or more base stations of the second operator O2 (including the node 4) preferably comprises a second slave synchronization interworking device 82 cooperating with the base stations of the second operator O2 (e.g. the base station 62) and configured to, upon reception of the second timestamp(s) TS2 from the second master synchronization interworking device 72, recover the second service clock C2 based on the second timestamp(s) TS2 and the network clock Cn, and transmit the recovered second service clock C2 to the base station(s) of the second operator O2.

Hence, each set master-slave synchronization interworking devices associated to a same operator advantageously allows synchronizing all the base stations of the operator to a service clock provided by the base station controller, which is independent of the service clock(s) of other network operator(s) that share the same backhauling network, and which is independent also of the network clock of the backhauling network.

This is achieved by exploiting the synchronous nature of the backhauling network, which advantageously makes the same network clock available to all its nodes, and hence to the master synchronization interworking device of the root node and to the various slave synchronization interworking devices provided at the various nodes of the backhauling network. In particular, since at each node the slave function has at its disposal the same network clock which the master function used at the root node for generating the timestamp(s), the slave function - by applying a differential clock recovery technique to the network clock and received timestamp(s) - is able to autonomously reconstruct (recover) the original service clock.

The accuracy of the recovered service clock is mainly limited by the accuracy of the network clock, plus a contribution inherent to the differential clock recovery technique. All the base stations of the same operator are then reciprocally synchronized with an acceptable accuracy, so that handover and other procedures requiring synchronization between base stations may be carried out in a proper way. The inventors in particular have estimated that, in case the accuracy of each EEC in each node is compliant with the above cited G.8262, the network clock Cn is good enough to provide service clock recovered by the slave functions with an accuracy of 10-20 ppb or better.

Although herein after it has been assumed that both the service clocks C1, C2 are independent of the network clock Cn, this is not limiting. Indeed, according to other scenarios in which the method of the present disclosure may be applied, the network clock Cn may be derived from one of the service clocks, for instance the first service clock C1. In such case, all the nodes of the backhauling network 2 receive synchronism from the base station controller 51 through the root node 3. In such case, the master and slave synchronization interworking devices 71, 81 associated with the first operator O1 may be omitted from the mobile communication system 1. The base stations of the first operator O1 (including the base station 61) are indeed automatically synchronized to the first service clock C1, which is distributed thereto through a known Physical Layer technique supported by the backhauling network 2 (e.g. the background or heart-beat messages defined by the ITU-T Recommendation G.8264).

However, according to advantageous variants of the present disclosure, even if the network clock Cn is derived from one of the service clocks, all the network operators may be provided with their respective sets of master and slave synchronization interworking devices, including the operator whose service clock is also used for deriving the network clock Cn. This has some advantages.

First of all, the mobile communication system 1 is homogeneous, in that synchronization is managed in the same way for all the mobile communication operators that share the backhauling network 2.

Moreover, this provides the capability of dynamically switching from a service clock to another one for deriving the network clock, e.g. based on the performance of the available service clocks. For instance, if for a certain period the accuracy of the first service clock C1 is higher than the accuracy of the second service clock C2, the first service clock C1 may be used for deriving the network clock Cn. If, successively, the measured accuracy of the first service clock C1 becomes worse than the accuracy of the second service clock C2, the second service clock C2 instead of the first service clock C1 may be used for deriving the network clock Cn. This guarantees that the backhauling network 2 is always synchronized with the most accurate service clock amongst the available ones. On the other hand, since both operators O1 and O2 are provided with their respective synchronization interworking devices, it is guaranteed that each operator may at any time use a service clock independent of the network clock Cn.

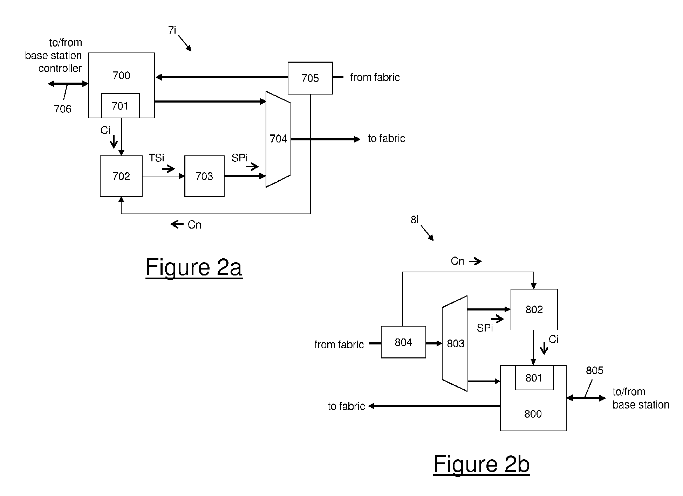

Herein after, with reference to Figures 2a and 2b, the structure and operation of the master and slave synchronization interworking devices will be described in further detail.

Figure 2a schematically shows a master synchronization interworking device 7i (i=1, 2) according to an embodiment of the present invention.

The master synchronization interworking device 7i preferably comprises a physical layer device (or, briefly, PHY device) 700 including a slave clock recovery module 701, a timestamp generator 702, a timestamp enveloper 703, a multiplexer 704 and a network clock recovery module 705.

The PHY device 700 is preferably a synchronous PHY device, in particular a SyncE PHY device. On the upstream side, the PHY device 700 is preferably connected to the base station controller (in particular, to a synchronous physical interface of the base station controller) by means of a bidirectional physical link 706. For instance, if the PHY device 700 is a 1000 Base X SyncE PHY device (optical), the bidirectional physical link 706 comprises a pair of optical fibers (one for the upstream direction and the other for the downstream direction). Otherwise, if the PHY device 700 is a 1000 Base T SyncE PHY device (electrical), the bidirectional physical link 706 comprises a single electrical line (8 parallel wires) supporting transmission of both upstream and downstream traffic. On the downstream side, the PHY device 700 preferably has an input connected to the network clock recovery module 705 and an output connected to the multiplexer 704.

The network clock recovery module 705 has its input connected to the fabric of the root node 3 of the backhauling network 2. An additional output of the network clock recovery module 705 is instead connected to the timestamp generator 702.

The timestamp generator 702 has two inputs connected to the network clock recovery module 705 and the slave clock recovery module 701, respectively, while its output is connected to the timestamp enveloper 703.

The multiplexer 704 has two inputs connected to the PHY device 700 and timestamp enveloper 703, respectively, while its output is connected to the fabric of the root node 3 of the backhauling network 2.

In Figure 2a, the links of the master synchronization interworking device 7i which support transmission of packets (namely, Ethernet links) are depicted as bold line arrows.

The master synchronization interworking device 7i is preferably implemented as a unit pluggable in an apparatus of the root node 3, as it will be discussed in further detail herein after.

The operation of the master synchronization interworking device 7i will be now described in detail herein after.

With reference first to the upstream direction, the master synchronization interworking device 7i receives upstream traffic from the fabric of the root node 3. The upstream traffic includes packets carrying user traffic.

The network clock recovery module 705 preferably recovers the network clock Cn, e.g. from the background or heart-beat messages defined by the ITU-T Recommendation G.8264 that propagate the network clock Cn through the network 2, and forwards it to all the elements of the synchronization interworking device 7i, including the timestamp generator 702.

In the meanwhile, the packets carrying user traffic are forwarded to the PHY device 700. In particular, such packets are written in a buffer of the PHY device 700 at a rate dependent of the recovered network clock Cn. Such packets are then read from the buffer of the PHY device 700 and sent to the base station controller via the physical link 706 at a rate dependent of the service clock Ci that the slave clock recovery module 701 obtains from the synchronous physical interface of the base station controller, as described in detail herein after.

With reference now to the downstream direction, the master synchronization interworking device 7i receives downstream traffic from the base station controller. The downstream traffic includes packets carrying user traffic. Such packets are preferably written within a buffer of the PHY device 700 at a rate dependent of the service clock Ci that the slave clock recovery module 701 obtains from the synchronous physical interface of the base station controller. In particular, in case of 1000 Base X SyncE PHY device (optical), the slave clock recovery module 701 automatically recovers the service clock Ci from the constant bit rate signal that the transmitter at the base station controller continuously transmits over the optical physical link 706, even when there are no packets to be transmitted. On the other hand, in case of 1000 Base T SyncE PHY device (electrical), PHY device 700 and the synchronous physical interface of the base station controller carry out an auto-negotiation procedure, where it is established that, from the synchronization point of view, the PHY device 700 plays a slave role and the synchronous physical interface of the base station controller plays a master role. This allows the PHY device 700 to accept synchronism imposed by the base station controller, namely the service clock Ci.

The slave clock recovery function 701 of the PHY device 700 then forwards the recovered service clock Ci to the timestamp generator 702 which, as described above, also receives the recovered network clock Cn from the network clock recovery function 705. Then, based on the service clock Ci and the network clock Cn, the timestamp generator 702 preferably periodically generates a timestamp TSi indicative of a difference between the clocks Ci and Cn. For instance, to this purpose the timestamp generator 702 may comprise a first counter which is increased at the frequency of the service clock Ci and a second counter which is increased at the frequency of the network clock Cn. Assuming that one wishes to periodically generate and transmit timestamps TSi with a period equal to N cycles of the service clock Ci, the two counters are reset at the beginning of each period and, after N cycles of the service clock Ci (namely, when the first counter stores the value N), the current value M of second counter is read and the timestamp TSi is set equal to the difference N-M between the current values of the two counters. Each timestamp TSi is accordingly a digital value, which may be transmitted through the backhauling network 2 within dedicated service synchronization packets.

In particular, each timestamp TSi generated by the timestamp generator 702 is forwarded to the timestamp enveloper 703, which generates service synchronization packets SPi including the timestamp TSi. The service synchronization packets SPi are preferably formatted according to the communication protocol supported by the backhauling network 2 (e.g. Ethernet or MPLS). Since each timestamp TSi shall be received by each node of the backhauling network 2 which cooperates with one or more base stations of that mobile communication operator, several copies of the service synchronization packet SPi are generated, each one having the destination address (namely the MAC address, in case of Ethernet packets) of a respective node. Alternatively, a multicast technique may be used, namely each timestamp TSi is included in a single service synchronization packet SPi which comprises a single multicast address. The service synchronization packet(s) SPi transporting each timestamp TSi may be differentiated from other downstream packets carrying user traffic and from network synchronization packets e.g. by use of a suitable VLAN-id (or even a suitable label value, in case the backhauling network 2 supports MPLS).

The service synchronization packets SPi and the downstream packets carrying user traffic buffered in the PHY device 700 are then forwarded to the multiplexer 704, which statistically multiplexes them and forwards them to the fabric of the root node 3, which will properly forward them across the backhauling network 2 based on their destination addresses.

Figure 2b schematically shows a slave synchronization interworking device 8i (i=1, 2) according to an embodiment of the present invention.

The slave synchronization interworking device 8i preferably comprises a physical layer device (or, briefly, PHY device) 800 including a master clock module 801, a service clock recovery module 802, a demultiplexer 803 and a network clock recovery module 804.

The PHY device 800 is preferably a synchronous PHY device, in particular a SyncE PHY device. On the downstream side, the PHY device 800 is preferably connected to the base station (in particular, to a synchronous physical interface of the base station) by means of a bidirectional physical link 805. For instance, if the PHY device 800 is a 1000 Base X SyncE PHY device (optical), the bidirectional physical link 805 comprises a pair of optical fibers (one for the upstream direction and the other for the downstream direction). Otherwise, if the PHY device 800 is a 1000 Base T SyncE PHY device (electrical), the bidirectional physical link 805 comprises a single electrical line (8 parallel wires) supporting transmission of both upstream and downstream traffic. On the upstream side, the PHY device 800 preferably has an input connected to the demultiplexer 803 and an output connected to fabric of the node.

The network clock recovery module 804 has its input connected to the fabric of the node, an output connected to the demultiplexer 803 and a further output connected to the service clock recovery module 802.

The demultiplexer 803 has an input connected to the network clock recovery module 804 and two outputs connected to the PHY device 800 and the service clock recovery module 802, respectively.

The service clock recovery module 802 has two inputs connected to the demultiplexer 803 and the network clock recovery module 804, respectively, and an output connected to the master clock module 801 of the PHY device 800.

In Figure 2b, the links of the slave synchronization interworking device 8i which support transmission of packets (namely, Ethernet links) are depicted as bold line arrows.

The slave synchronization interworking device 8i is preferably implemented as a unit pluggable in an apparatus of the node (e.g. the node 4 shown in Figure 1), as it will be discussed in further detail herein after.

The operation of the slave synchronization interworking device 8i will be now described in detail herein after.

With reference to the upstream direction, the slave synchronization interworking device 8i receives upstream traffic from the base station via the physical link 805. The upstream traffic includes packets carrying user traffic, which are written in a buffer of the PHY device 800 at a rate dependent of the service clock Ci recovered by the service clock recovery module 802, as it will be described in detail herein after. Such packets are then read from the buffer of the PHY device 800 and sent to the fabric of the node at a rate dependent of the network clock Cn recovered by the network clock recovery module 804, as it will be described in detail herein after.

With reference now to the downstream direction, the slave synchronization interworking device 8i receives downstream traffic from the fabric of the node in which is it implemented. The downstream traffic includes packets carrying user traffic and service synchronization packets SPi that transport the timestamps TSi generated by the master synchronization interworking device 8i at the root node 3.

The network clock recovery module 804 preferably recovers the network clock Cn, e.g. from the background or heart-beat messages defined by the ITU-T Recommendation G.8264 that propagate the network clock Cn through the network 2, and forwards it to all the elements of the slave synchronization interworking device 8i, including the service clock recovery module 802.

In the meanwhile, packets carrying user traffic and service synchronization packets SPi are forwarded to the demultiplexer 803, which forwards packets carrying user traffic to the PHY device 800 and service synchronization packets SPi to the service clock recovery module 802. In particular, the packets carrying user traffic are written in a buffer of the PHY device 800 at a rate dependent of the recovered network clock Cn. Such packets are then read from the buffer of the PHY device 800 and sent to the base station via the physical link 805 at a rate dependent of the service clock Ci recovered by the service clock recovery module 802, as described in detail herein after.

As the service clock recovery module 802 receives the recovered network clock Cn from the network clock recovery module 804 and the service synchronization packets SPi from the demultiplexer 803, it preferably uses the network clock Cn and the timestamps TSi comprised in the service synchronization packets SPi for recovering the service clock Ci by means of a differential clock recovery technique. In particular, the service clock recovery module 802 terminates each service synchronization packet SPi and reads the timestamp TSi comprised therein. Then, for example, the service clock Ci is generated by a VCO (Voltage Control Oscillator) whose control voltage is determined by the difference between the received timestamp TSi and the value of a counter increased at the rate of the network clock Cn.

Then, the service clock recovery module 802 preferably provides the recovered service clock Ci to the PHY device 800, in particular to the master clock module 801.

The master clock module 801 preferably provides the service clock Ci to the base station, in particular to the synchronous physical interface of the base station. In particular, in case of 1000 Base X SyncE PHY device (optical), the master clock module 801 automatically provides the service clock Ci by means of the constant bit rate signal that its transmitter at the downstream side continuously transmits over the optical link 805, even when there are no packets to be transmitted. On the other hand, in case of 1000 Base T SyncE PHY device (electrical), PHY device 800 and synchronous physical interface of the base station carry out an auto-negotiation procedure, where it is established that, from the synchronization point of view, the PHY device 800 plays a master role and the synchronous physical interface of the base station plays a slave role. This allows the PHY device 800 to impose to the base station the synchronism received from the base station controller, namely the service clock Ci. The base station is then synchronized to the service clock Ci.

Therefore, by providing a slave synchronization interworking device similar to 8i at all the nodes of the backhauling network which are locally connected to a base station of a given operator, all the base stations of that operator may be advantageously synchronized to a same service clock, which each slave function may locally recover based on the network clock (which is inherently available at the node, thanks to the synchronous nature of the backhauling network) and the timestamps received from the master function. Such synchronism is advantageously independent of the network clock of the backhauling network and also of service clocks of other operators using the same backhauling network.

It shall be noticed that, in the PHY devices 700 and 800 of the master and slave interworking devices, packets carrying user traffic are written and read at different rates. For instance, by referring to the downstream direction in the slave function 8i, packets are written in the buffer at the frequency of the network clock Cn, whereas they are read from the same buffer at the frequency of the service clock Ci. In case the service clock Ci has a frequency lower than the network clock Cn, this may induce overflow of the buffer. According to a particularly preferred variant of the present disclosure, the intra-frame gap between consecutive packets transmitted on the bidirectional physical link 805 is preferably tailored in order to prevent overflows, taking into account typical mismatch between service clock Ci and network clock Cn. The inventors have estimated that an intra-frame gap of 13 bytes allows preventing overflow in case of a mismatch of 100 ppm and in case of transmission of packets having payloads of 1000 bytes of more (the so-called "jumbo frames" according to the Ethernet terminology). The same intra-frame gap may be applied also to consecutive packets transmitted between base station controller and master synchronization interworking device over the physical link 706.

As mentioned above, both the master and the slave devices may be implemented as units pluggable in the node apparatuses.

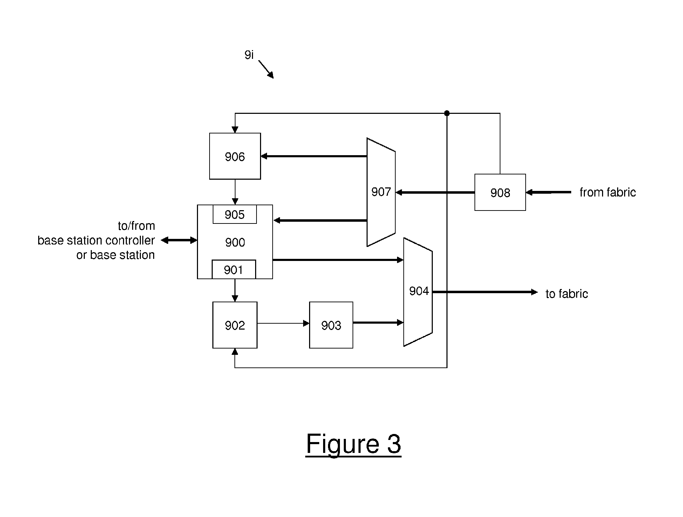

According to a particularly advantageous variant, the master synchronization interworking device and the slave synchronization interworking device are integrated in a single device. Such device 9i is schematically shown in Figure 3.

The device 9i preferably comprises a PHY device 900 including both a slave clock recovery module 901 and a master clock module 905, a timestamp generator 902, a timestamp enveloper 903, a multiplexer 904, a service clock recovery module 906, a demultiplexer 907 and a network clock recovery module 908.

The PHY device 900 and network clock recovery module 908 are suitable for performing the master synchronization interworking device in combination with slave clock recovery module 901, timestamp generator 902, timestamp enveloper 903 and multiplexer 904 as described above, whereas they are suitable for performing the slave synchronization interworking device in combination with master clock module 905, service clock recovery module 906 and demultiplexer 907 as described above.

The device 9i is preferably implemented as a SFP (Small Form-factor Pluggable) device. This advantageously allows plugging it into standard slots which are typically provided in network apparatuses for other purposes (typically, for housing SFP transceivers). This advantageously allows providing already deployed network apparatuses with the master/slave synchronization interworking device as described above. This way, the service clock transmission as described above may be readily provided in any already deployed synchronous packet-switched network.

The functions of the various elements shown in the Figures 2a, 2b and 3, including any functional blocks labeled as "device" or "module", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "device" or "module" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A method for transmitting a service clock (C1, C2) from a base station controller (51, 52) to at least one base station (61, 62) of a mobile communication system (1) through a synchronous, packet-switched backhauling network (2) synchronized to a network clock (Cn), said method comprising:
a) at a master synchronization interworking device (71, 72) interfacing said base station controller (51, 52) and said backhauling network (2), receiving said service clock (C1, C2) from said base station controller (51, 52), generating a timestamp (TS1, TS2) indicative of a difference between said network clock (Cn) and said service clock (C1, C2), and transmitting said timestamp (TS1, TS2) through said backhauling network (2).

2. The method of claim 1 further comprising:
b) at a slave synchronization interworking device (81, 82) interfacing said backhauling network (2) and said at least one base station (61, 62), receiving said timestamp (TS1, TS2) from said backhauling network (2), recovering said service clock (C1, C2) based on said received timestamp (TS1, TS2) and said network clock (Cn), and forwarding said recovered service clock (C1, C2) to said at least one base station (61, 62).

3. The method according to claim 1 or 2, wherein said step a) comprises receiving said service clock (C1, C2) through a bidirectional physical link (706) connecting said master synchronization interworking device (71, 72) to a synchronous physical interface of said base station controller (51, 52).

4. The method according to claim 2, wherein said step b) comprises forwarding said recovered service clock (C1, C2) through a further bidirectional physical link (805) connecting said slave synchronization interworking device (81, 82) to a further synchronous physical interface of said at least one base station (61, 62).

5. The method according to any of the preceding claims, wherein said step a) comprises recovering said network clock (Cn) from said backhauling network (2) and using said recovered network clock (Cn) and said service clock (C1, C2) for generating said timestamp (TS1, TS2).

6. The method according to any of the preceding claims, wherein said step b) comprises recovering said network clock (Cn) from said backhauling network (2) and using said recovered network clock (Cn) and said received timestamp (TS1, TS2) for recovering said service clock (C1, C2).

7. The method according to any of the preceding claims, wherein said step a) comprises generating a sequence of timestamps (TS1, TS2).

8. The method according to any of the preceding claims, wherein said step a) comprises generating a service synchronization packet (SPi) comprising said timestamp (TS1, TS2) and transmitting said service synchronization packet (SPi) through said backhauling network (2).

9. The method according to any of the preceding claims, wherein it further comprises, while said service clock (C1, C2) is transmitted through said backhauling network (2), transmitting a further service clock (C2, C1) from a further base station controller (52, 51) to at least one further base station (62, 61) of said mobile communication system (1) through said backhauling network (2), said method comprising:
a') at a further master synchronization interworking device (72, 71) interfacing said further base station controller (52, 51) and said backhauling network (2), receiving said further service clock (C2, C1) from said further base station controller (52, 51), generating a further timestamp (TS2, TS1) indicative of a difference between said network clock (Cn) and said further service clock (C2, C1), and transmitting said further timestamp (TS2, TS1) through said backhauling network (2); and
b') at a further slave synchronization interworking device (82, 81) interfacing said backhauling network (2) and said at least one further base station (62, 61), receiving said further timestamp (TS2, TS1) from said backhauling network (2), recovering said further service clock (C2, C1) based on said further received timestamp (TS2, TS1) and said network clock (Cn), and forwarding said further recovered service clock (C2, C1) to said at least one further base station (62, 61).

10. The method according to claim 8, wherein said network clock (Cn) is derived from one of said service clock (C1, C2) and said further service clock (C2, C1).

11. A device (71, 72) suitable for interfacing a base station controller (51, 52) and a backhauling network (2) of a mobile communication system (1), said backhauling network (2) being a synchronous, packet-switched network synchronized to a network clock (Cn), said device (71, 72) being configured to:
- receive a service clock (C1, C2) from said base station controller (51, 52);
- generate a timestamp (TS1, TS2) indicative of a difference between said network clock (Cn) and said service clock (C1, C2); and
- transmit said timestamp (TS1, TS2) through said backhauling network (2).

12. A device (81, 82) suitable for interfacing a backhauling network (2) and at least one base station (61, 62) of a mobile communication system (1), said backhauling network (2) being a synchronous, packet-switched network synchronized to a network clock (Cn), said device (81, 82) being configured to:
- receive a timestamp (TS1, TS2) from said backhauling network (2);
- recover a service clock (C1, C2) based on said received timestamp (TS1, TS2) and said network clock (Cn); and
- forward said recovered service clock (C1, C2) to said at least one base station (61, 62).

13. A device (9i) suitable for interfacing a backhauling network (2) of a mobile communication system (1) with a base station controller (51, 52) or at least one base station (61, 62) of said mobile communication system (1), said device (71, 72) being configured to:
- interface said base station controller (51, 52) and said backhauling network (2), receive said service clock (C1, C2) from said base station controller (51, 52), generate a timestamp (TS1, TS2) indicative of a difference between said network clock (Cn) and said service clock (C1, C2), and transmit said timestamp (TS1, TS2) through said backhauling network (2); or to
- interface said backhauling network (2) and said at least one base station (61, 62), receive a timestamp (TS1, TS2) from said backhauling network (2), recover said service clock (C1, C2) based on said received timestamp (TS1, TS2) and said network clock (Cn), and forward said recovered service clock (C1, C2) to said at least one base station (61, 62).

14. The device (7i, 9i) according to any of claims 10 to 12, said device being implemented as a unit pluggable in an apparatus of a node of said backhauling network (2).

15. The device (7i, 9i) according to claim 13, wherein said device is implemented as a small form-factor pluggable device.

16. A mobile communication system (1) comprising a base station controller (51, 52), at least one base station (61, 62) and a synchronous, packet-switched backhauling network (2) synchronized to a network clock (Cn), said mobile communication system (1) also comprising a first device (71, 72) according to claim 10 or 12 arranged so as to interface said base station controller (51, 52) and said backhauling network (2), and a second device (81, 82) according to claim 11 or 12 arranged so as to interface said backhauling network (2) and said at least one base station (61, 62).

## Amended claims

### Amended claims in accordance with Rule 137(2) EPC.

1. A method for transmitting a service clock (C1, C2) from a base station controller (51, 52) to at least one base station (61, 62) of a mobile communication system (1) through a synchronous, packet-switched backhauling network (2) synchronized to a network clock (Cn), said method comprising:
a) at a master synchronization interworking device (71, 72) interfacing said base station controller (51, 52) and said backhauling network (2), receiving said service clock (C1, C2) from said base station controller (51, 52), recovering said network clock (Cn) from said backhauling network (2), generating a timestamp (TS1, TS2) indicative of a difference between said recovered network clock (Cn) and said service clock (C1, C2), and transmitting said timestamp (TS1, TS2) through said backhauling network (2); and
b) at a slave synchronization interworking device (81, 82) interfacing said backhauling network (2) and said at least one base station (61, 62), receiving said timestamp (TS1, TS2) from said backhauling network (2), recovering said network clock (Cn) from said backhauling network (2), recovering said service clock (C1, C2) based on said received timestamp (TS1, TS2) and said recovered network clock (Cn), and forwarding said recovered service clock (C1, C2) to said at least one base station (61, 62).

2. The method according to claim 1, wherein said step a) comprises receiving said service clock (C1, C2) through a bidirectional physical link (706) connecting said master synchronization interworking device (71, 72) to a synchronous physical interface of said base station controller (51, 52).

3. The method according to claim 1, wherein said step b) comprises forwarding said recovered service clock (C1, C2) through a further bidirectional physical link (805) connecting said slave synchronization interworking device (81, 82) to a further synchronous physical interface of said at least one base station (61, 62).

4. The method according to any of the preceding claims, wherein said step a) comprises generating a sequence of timestamps (TS1, TS2).

5. The method according to any of the preceding claims, wherein said step a) comprises generating a service synchronization packet (SPi) comprising said timestamp (TS1, TS2) and transmitting said service synchronization packet (SPi) through said backhauling network (2).

6. The method according to any of the preceding claims, wherein it further comprises, while said service clock (C1, C2) is transmitted through said backhauling network (2), transmitting a further service clock (C2, C1) from a further base station controller (52, 51) to at least one further base station (62, 61) of said mobile communication system (1) through said backhauling network (2), said method comprising:
a') at a further master synchronization interworking device (72, 71) interfacing said further base station controller (52, 51) and said backhauling network (2), receiving said further service clock (C2, C1) from said further base station controller (52, 51), recovering said network clock (Cn) from said backhauling network (2), generating a further timestamp (TS2, TS1) indicative of a difference between said recovered network clock (Cn) and said further service clock (C2, C1), and transmitting said further timestamp (TS2, TS1) through said backhauling network (2); and
b') at a further slave synchronization interworking device (82, 81) interfacing said backhauling network (2) and said at least one further base station (62, 61), receiving said further timestamp (TS2, TS1) from said backhauling network (2), recovering said network clock (Cn) from said backhauling network (2), recovering said further service clock (C2, C1) based on said further received timestamp (TS2, TS1) and said recovered network clock (Cn), and forwarding said further recovered service clock (C2, C1) to said at least one further base station (62, 61).

7. The method according to claim 6, wherein said network clock (Cn) is derived from one of said service clock (C1, C2) and said further service clock (C2, C1).

8. A device (71, 72) suitable for interfacing a base station controller (51, 52) and a backhauling network (2) of a mobile communication system (1), said backhauling network (2) being a synchronous, packet-switched network synchronized to a network clock (Cn), said device (71, 72) being configured to:
- receive a service clock (C1, C2) from said base station controller (51, 52);
- recover said network clock (Cn) from said backhauling network (2);
- generate a timestamp (TS1, TS2) indicative of a difference between said recovered network clock (Cn) and said service clock (C1, C2); and
- transmit said timestamp (TS1, TS2) through said backhauling network (2).

9. A device (81, 82) suitable for interfacing a backhauling network (2) and at least one base station (61, 62) of a mobile communication system (1), said backhauling network (2) being a synchronous, packet-switched network synchronized to a network clock (Cn), said device (81, 82) being configured to:
- receive a timestamp (TS1, TS2) from said backhauling network (2);
- recover said network clock (Cn) from said backhauling network (2);
- recover a service clock (C1, C2) based on said received timestamp (TS1, TS2) and said recovered network clock (Cn); and
- forward said recovered service clock (C1, C2) to said at least one base station (61, 62).

10. The device (7i, 9i) according to claim 8 or 9, said device being implemented as a unit pluggable in an apparatus of a node of said backhauling network (2).

11. The device (7i, 9i) according to claim 8 or 9, wherein said device is implemented as a small form-factor pluggable device.

12. A mobile communication system (1) comprising a base station controller (51, 52), at least one base station (61, 62) and a synchronous, packet-switched backhauling network (2) synchronized to a network clock (Cn), said mobile communication system (1) also comprising a first device (71, 72) according to claim 8 arranged so as to interface said base station controller (51, 52) and said backhauling network (2), and a second device (81, 82) according to claim 9 arranged so as to interface said backhauling network (2) and said at least one base station (61, 62).
